# EUROPEAN PATENT APPLICATION

(11) **EP 4 560 442 A1**
(43) Date of publication of application: **28.05.2025**
(21) Application number: 24215341.9
(22) Date of filing: 26.11.2024
(51) Int. Cl.: G06F 3/01, G06T 19/00, G02B 27/01

(54) **IMAGE DISPLAY METHOD AND APPARATUS, STORAGE MEDIUM, DEVICE, AND PROGRAM PRODUCT**

(30) Priority: 27.11.2023 CN 202311597348
(71) Applicant: Beijing Zitiao Network Technology Co., Ltd., Beijing 100190 (CN)
(72) Inventor: FANG, Chi, Beijing, 100028 (CN); LIU, Shuo, Beijing, 100028 (CN); LIU, Chin-Wei, Beijing, 100028 (CN); LIU, Mengqian, Beijing, 100028 (CN); GUO, Jia, Beijing, 100028 (CN); MU, Rongxuan, Beijing, 100028 (CN)
(74) Representative: Dentons UK and Middle East LLP

(57) **Abstract**

The present application discloses an image display method and apparatus, a storage medium, a device, and a program product. The method can be applied to a virtual reality device and includes: displaying a three-dimensional environment and presenting dynamic visual compensation elements in the three-dimensional environment in response to motion of a current object wearing the virtual reality device.

## Description

### TECHNICAL FIELD

The present application relates to the field of image processing technologies, and in particular, to an image display method and apparatus, a storage medium, a device, and a program product.

### BACKGROUND

Virtual reality technologies have become an important part of the current science and technology and entertainment industries. However, when a user experiences a virtual reality scene using a virtual reality device, they are often prone to experiencing dizziness because a view of an external world is eliminated and completely replaced by a simulated view that is influenced, but not fully controlled, by body motion. The feeling of dizziness is primarily caused by the inconsistency between the simulated view and an expectation of the brain based on stimuli from other senses (especially the vestibular system).

### SUMMARY

According to an aspect, an embodiment of the present application provides an image display method. The method can be applied to a virtual reality device and includes:
displaying a three-dimensional environment; and
presenting dynamic visual compensation elements in the three-dimensional environment in response to motion of a current object wearing the virtual reality device.

According to another aspect, an embodiment of the present application provides an image display apparatus. The apparatus can be comprised the virtual reality device and includes:
a first display unit configured to display a three-dimensional environment; and
a second display unit configured to present dynamic visual compensation elements in the three-dimensional environment in response to motion of a current object wearing the virtual reality device.

According to another aspect, an embodiment of the present application provides a computer-readable storage medium storing a computer program, where the computer program is adapted to be loaded by a processor, to perform the image display method according to any one of the above embodiments.

According to another aspect, an embodiment of the present application provides a terminal device including a processor and a memory, where the memory stores a computer program, and the processor is configured to perform the image display method according to any one of the above embodiments by invoking the computer program stored in the memory.

According to another aspect, an embodiment of the present application provides a computer program product including a computer program that, when executed by a processor, causes the image display method according to any one of the above embodiments to be implemented.

### BRIEF DESCRIPTION OF THE DRAWINGS

To describe the technical solutions in the embodiments of the present application more clearly, the following briefly describes the accompanying drawings required for describing the embodiments. Apparently, the accompanying drawings in the following description show merely some embodiments of the present application, and those skilled in the art may derive other drawings from these accompanying drawings without creative efforts.
FIG. 1 is a schematic flowchart of an image display method according to an embodiment of the present application.
FIG. 2 is a schematic diagram of a first application scenario of the image display method according to an embodiment of the present application.
FIG. 3 is a schematic diagram of a second application scenario of the image display method according to an embodiment of the present application.
FIG. 4 is a schematic diagram of a third application scenario of the image display method according to an embodiment of the present application.
FIG. 5 is a schematic diagram of a third application scenario of the image display method according to an embodiment of the present application.
FIG. 6 is a schematic diagram of a structure of an image display apparatus according to an embodiment of the present application.
FIG. 7 is a schematic diagram of a first structure of a terminal device according to an embodiment of the present application.
FIG. 8 is a schematic diagram of a second structure of the terminal device according to an embodiment of the present application.

### DETAILED DESCRIPTION

The technical solutions in the embodiments of the present application will be described clearly and completely below with reference to the accompanying drawings in the embodiments of the present application. Apparently, the described embodiments are only some rather than all of the embodiments of the present application. All other embodiments obtained by those skilled in the art based on the embodiments of the present application without creative efforts shall fall within the scope of protection of the present application.

The embodiments of the present application provide an image display method and apparatus, a computer-readable storage medium, a terminal device, a server, and a computer program product. Specifically, the image display method in the embodiments of the present application may be performed by the terminal device or the server.

The embodiments of the present application may be applied to various application scenarios, such as extended reality (XR), virtual reality (VR), augmented reality (AR), and mixed reality (MR).

First, some nouns or terms that appear in the description of the embodiments of the present application are explained as follows.

Virtual reality scene is a virtual reality scene that is displayed (or provided) when an application is running on a terminal or server. Optionally, the virtual reality scene is a simulated environment of a real world or a semi-simulated and semi-fictional virtual environment. The virtual reality scene is either a two-dimensional virtual scene or a three-dimensional virtual scene. The virtual environment may be the sky, the land, the sea, etc., where the land includes environmental elements such as deserts and cities. The virtual reality scene is a scene for complete game logic of a virtual character controlled by a user.

Virtual character is a dynamic object that can be controlled in the virtual reality scene. Optionally, the dynamic object may be a virtual character, a virtual animal, an anime character, etc. The virtual character is a character controlled by a user using an input device, or artificial intelligence (AI) set up in a virtual environment-based battle through training, or a non-player character (NPC) set up in a virtual reality scene-based battle. Optionally, the virtual character is a virtual character that engages in a competition in the virtual reality scene. Optionally, the number of virtual characters in the virtual reality scene-based battle is preset, or is dynamically determined based on the number of clients joining the battle, which is not limited in the embodiments of the present application. In a possible implementation, the user can control the virtual character to move, for example, to move the head, run, jump, crawl, etc., in the virtual reality scene, and can also control the virtual character to use skills, virtual props, etc. provided by the application to battle with other virtual characters.

Extended reality (XR) is a concept including virtual reality (VR), augmented reality (AR), and mixed reality (MR), representing a technology that allows for the creation of an environment where a virtual world is connected to a physical world, enabling a user to interact with the environment in real time.

Virtual reality (VR) is a technology that allows for the creation and experience of a virtual world. It generates a virtual environment through computation, and is a simulation of an interactive three-dimensional dynamic visual scene and an entity behavior based on fusion of multi-source information (the virtual reality mentioned herein includes at least visual perception, may further include auditory perception, tactile perception, and motion perception, and even includes gustatory perception, olfactory perception, etc.), immersing a user in a simulated virtual reality environment, and realizing applications in a plurality of virtual environments such as in maps, games, videos, education, medical care, simulation, collaborative training, sales, assisted manufacturing, maintenance, and repair.

Augmented reality (AR) is a technology for computing, in real time in a process in which a camera acquires an image, a camera posture parameter of the camera in a physical world (or referred to as a three-dimensional world or a real world) and adding, based on the camera posture parameter, a virtual element to the image acquired by the camera. The virtual element includes, but is not limited to: an image, a video, and a three-dimensional model. An objective of the AR technology is to connect the virtual world to the physical world for interaction.

Mixed reality (MR) integrates a sensory input (for example, a virtual object) created by a computer and a sensory input from a physical setting or a representation thereof in a simulated setting. In some MR settings, the sensory input created by the computer may adapt to changes in the sensory input from the physical setting. In addition, some electronic systems configured to present the MR setting may monitor an orientation and/or a position relative to the physical setting, so that the virtual object can interact with a real object (that is, a physical element from the physical setting or a representation thereof). For example, the system may monitor motion, so that a virtual plant looks still relative to a physical building.

Augmented virtuality (AV): An AV setting is a simulated setting in which a computer-created setting or a virtual setting is incorporated with at least one sensory input from a physical setting. One or more sensory inputs from the physical setting may be a representation of at least one feature of the physical setting. For example, a virtual object may present the color of a physical element captured by one or more imaging sensors. For another example, a virtual object may present features that are consistent with actual weather conditions in the physical setting, for example, features recognized through a weather-related imaging sensor and/or online weather data. In another example, an augmented reality forest may have virtual trees and structures, but an animal may have features that are accurately reproduced from images taken of a physical animal.

Virtual field of view is a region in a virtual environment that a user can perceive through the lens of a virtual reality device, and the perceived region is represented by an angle of the virtual field of view (FOV).

A virtual reality device is a terminal that achieves virtual reality effects, and may be generally provided in the form of glasses, a head-mounted display (HMD), or contact lenses, to implement visual perception and other forms of perception. Certainly, the virtual reality device is not limited to these implementation forms, and may be further miniaturized or enlarged as needed.

The virtual reality device described in the embodiments of the present application may include, but is not limited to, the following types:
a personal computer virtual reality (PCVR) device which performs computation related to a virtual reality function and data output by using a PC, where an external personal computer virtual reality device achieves virtual reality effects by using data output by the PC;
a mobile virtual reality device which supports setting of a mobile terminal (for example, a smartphone) in various manners (for example, a head-mounted display provided with a special slot), and is connected to the mobile terminal in a wired or wireless manner, where the mobile terminal performs computation related to a virtual reality function, and outputs data to the mobile virtual reality device, for example, a virtual reality video is watched through an app on the mobile terminal; and
an all-in-one virtual reality device which has a processor configured to perform computation related to a virtual function, and therefore has an independent virtual reality input and output function, with no need to be connected to a PC or a mobile terminal, providing a high degree of freedom of use.

They are respectively described in detail below. It should be noted that the order of description of the following embodiments does not constitute a limitation on the order of precedence for the embodiments.

Each embodiment of the present application provides an image display method. The method may be performed by a terminal or a server, or by both the terminal and the server. In the embodiment of the present application, description is made by using an example in which the image display method is performed by the terminal (a terminal device).

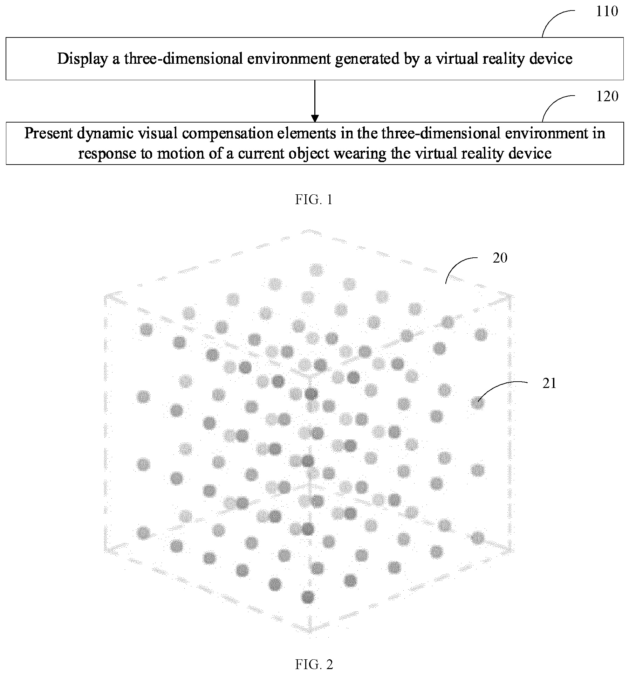

Referring to FIG. 1 to FIG. 5, FIG. 1 is a schematic flowchart of an image display method according to an embodiment of the present application, and FIG. 2 to FIG. 5 are all schematic diagrams of application scenarios of the image display method according to an embodiment of the present application. The method may be applied to a virtual reality device. The method includes the following steps 110 and 120.

Step 110: Display a three-dimensional environment.

The three-dimensional environment includes not only a real space environment, but also a virtual space environment. This three-dimensional environment may be generated by a computer, or may be obtained through acquisition and processing by other devices. In the virtual space environment, a user may see how the user and other objects behave in a virtual space, having a feeling of immersion.

Step 120: Present dynamic visual compensation elements in the three-dimensional environment in response to motion of a current object wearing the virtual reality device.

The visual compensation elements are virtual elements that are generated, based on visual optical flow, for performing reverse visual compensation for visual signals generated by the motion of the current object.

For example, the current object is a user currently using the virtual reality device.

For example, when the current object wearing the virtual reality device performs motion, the visual compensation elements dynamically change in the three-dimensional environment. The visual compensation elements are implemented using a visual optical flow technique. The visual optical flow is a set of image sequences related to each other, which can describe a motion direction and speed of a moving object. By processing and analyzing these image sequence, motion information of the current object can be obtained, and then corresponding visual signals are generated. These visual signals are reversely applied to the visual compensation elements, such that the visual compensation elements present a dynamic visual effect in the three-dimensional environment. The dynamic visual compensation elements can effectively reduce a feeling of dizziness that the user experiences when using the virtual reality device. This is because when the user is in motion, the brain receives corresponding visual signals, such that the user can better adapt to a motion change in a virtual environment. This helps improve the user experience and makes it more comfortable for the user to use the virtual reality device.

According to the embodiments of the present application, the dynamic visual compensation elements are presented in the three-dimensional environment in response to the motion of the current object wearing the virtual reality device, such that the dizziness that a user experiences when using the virtual reality device can be effectively reduced, thus improving the user experience.

In some embodiments, step 120 may be implemented through the following steps 121 to 125 (not shown in the figure), which are specifically as follows.

Step 121: Obtain posture data generated when the current object wearing the virtual reality device performs motion, where the posture data includes head motion information.

For example, the virtual reality device includes the head-mounted display for the current object to wear on the head, and the controller for the current object to interact with the virtual reality scene.

The head motion information is obtained through the head-mounted display, where the head motion information is used to control the head posture of the virtual character that corresponds to the current object in the virtual reality scene. For example, the head motion information may include head pose information and/or viewpoint motion information of the current object that is obtained based on the head-mounted display, mounting pose information of the head-mounted display, and head space displacement information and head space rotation information that are input based on the controller. For example, the head pose information can be obtained by tracking the position and direction of the head of the current object through a tracking system in the head-mounted display, the viewpoint motion information can be obtained by tracking the position and direction of the head of the current object as well as an eye movement direction through the tracking system in the head-mounted display, and the mounting pose information can be obtained by tracking the position and direction of the head-mounted display through the tracking system in the head-mounted display.

Step 122: Generate a first scene image for simulation of a virtual reality scene based on the posture data.

The head motion information includes, but is not limited to, movements of nodding the head, shaking the head, turning the head sideways, turning the head, etc. The head motion information is used to control the head posture of the virtual character that corresponds to the current object in the virtual reality scene. For example, if the current object (the user) turns the head to the right, the virtual character should accordingly turn the head to the right to keep the head motion consistent with the head motion of the current object (the user).

Based on the posture data, the first scene image for simulation of the virtual reality scene may be generated. The first scene image comprises the head motion information, which is generated in real time based on the motion and posture of the current object (the user), and can thus be considered as an avatar of the current object (the user) in the virtual reality scene.

Step 123: Generate a visual compensation image including the dynamic visual compensation elements, where the visual compensation elements are virtual elements that are generated, based on the visual optical flow, for performing reverse visual compensation for the visual signals generated by the head motion information.

In the virtual reality technology, visual compensation is an important technical means, which is intended to reduce the dizziness and other types of discomfort that the user may experience when using the virtual reality device. Based on the head motion information, the visual compensation image including the dynamic visual compensation elements can be generated, where the visual compensation elements are virtual elements that are generated, based on the visual optical flow technique, for performing reverse visual compensation for the visual signals generated by the head motion information.

The visual optical flow is a concept in detection of motion of an object in a visual field, which is used to describe motion of an observed object, surface, or edge that is caused relative to motion of an observer. Specifically, the optical flow is an instantaneous speed of pixel motion of a moving object on an observed imaging plane in space. An optical flow method is a method that uses a change of a pixel in an image sequence in time domain and a correlation between adjacent frames to find a correspondence between a previous frame and a current frame, so as to compute motion information of an object between the adjacent frames. Generally, an optical flow is caused by motion of a foreground object itself in a scene, motion of a camera, or both. The optical flow method is particularly useful in pattern recognition, computer vision, and other image processing fields, and can be applied to motion detection, object segmentation, calculation of collision time and object dilation, motion-compensated coding, or stereo measurement through object surfaces and edges, etc. The optical flow method includes dense optical flow and sparse optical flow based on the density of two-dimensional vectors in a resulting optical flow field. The dense optical flow is an image registration method of performing point-by-point matching for an image or a specified region. It computes offsets of all points in the image are calculated, creating a dense optical flow field. The sparse optical flow tracks only a subset of some points in an image. This algorithm is usually fast and reliable because it focuses only on specific points that are easily tracked.

The visual optical flow in the embodiments of the present application may be implemented based on an acceleration (A for short), contrast (C for short), a distance from center (D for short), and square (S for short), which may be referred to as ACDS for short. ACDS is a technique that provides the user with a set of visual optical flows in a virtual reality environment. Based on the visual optical flow, reverse compensation is performed during forward, backward, left, and right movement of the user, such that perceptual convergence of vision and vestibular acceleration is achieved, thereby achieving the effect of alleviating a feeling of dizziness in virtual reality.

The acceleration (A for short) may represent a core variable of dizziness. Reverse compensation may be performed on the acceleration A of virtual transformation by creating a moving dot matrix (which is used to generate a space dot matrix image) or distorting an original scene image (which is used to generate a mask layer), to obtain a visual compensation image.

The contrast (C for short) may represent the intensity of perception of image displacement. The perception of image displacement by the current object may be weakened by controlling local or global image contrast C between the visual compensation image and the first scene image.

The distance from center (D for short) may represent a distance and/or an included angle between the visual compensation image and a center point of the first scene image. A greater distance from center D indicates greater perception of a speed and/or an acceleration. The distance from center D may be adjusted based on the acceleration A, to implement control over a mask radius reflecting a tunnel effect in the visual compensation image.

The square (S for short) may represent the size of a display region of the visual compensation image. The square S is related to the above distance from center D. A greater number of reference images reflecting a speed and/or an acceleration indicates greater perception of the speed and/or the acceleration. The square S may be adjusted based on the acceleration A, to implement control over a mask area reflecting a tunnel effect in the visual compensation image.

For example, based on the visual optical flow, the visual signals are generated by measuring the motion speed and direction of different parts in a scene image. In the virtual reality scene, corresponding visual signals can be obtained by capturing the head motion information. Based on these visual signals, visual compensation elements can be generated for performing reverse visual compensation for the visual signals generated by the head motion information.

Visual signals generated by the visual compensation elements are opposite to the visual signals generated by the head motion information. For example, if the current object (the user) moves their head forward, the dynamic visual compensation elements in the visual compensation image may move backward, to counteract a visual change resulting from the forward movement of the head. The compensation can reduce the dizziness and other types of discomfort that may result from the inconsistency between a simulated view and visual signals expected by the brain.

In some embodiments, the visual compensation image is a see-through visual compensation image.

The see-through visual compensation image may be transparent or semi-transparent to some extent, such that in subsequent steps, when the visual compensation image is displayed in the first scene image, the user can more clearly see another object and scene in the first scene image through the visual compensation image. Therefore, the sense of immersion and the quality of experience of the user can be improved.

In some embodiments, the visual compensation image includes a space dot matrix image.

The generating a visual compensation image including the dynamic visual compensation elements includes:
generating, based on the head motion information, the space dot matrix image including the dynamic visual compensation elements.

For example, the head motion information may include head pose information and/or viewpoint motion information of the current object that is obtained based on the head-mounted display, mounting pose information of the head-mounted display, and head space displacement information and head space rotation information that are input based on the controller. The space dot matrix image including the dynamic visual compensation elements is generated based on the head motion information, where the space dot matrix image is an image that is generated, based on the visual optical flow, for performing reverse visual compensation for the visual signals generated by the head motion information.

The head space displacement information and the head space rotation information in the head motion information may have a directly proportional mapping relationship with image attributes, such as an optical flow direction, a movement speed, and a dot matrix area, of the visual compensation elements in the space dot matrix image.

For example, the visual compensation image includes the space dot matrix image. The space dot matrix image is a special image including many dots, where the dots may represent the visual compensation elements. For each dot, the color, size, shape, and other attributes may be independently set. This image may be used to create a target visual effect, such as zoom-in, zoom-out, rotation, a stereo sense, a sense of distance, and a sense of perspective. The space dot matrix image may include an outer dot matrix or an inner dot matrix. The target visual effect may be created by controlling the brightness, the transparency, the saturation, the area, the volume, etc. of the dot matrices.

For example, in the schematic diagram of the space dot matrix image shown in FIG. 2, a space dot matrix image 20 including dynamic visual compensation elements is generated based on head motion information, where the space dot matrix image 20 may include a plurality of dots 21 representing the visual compensation elements.

For example, a see-through space dot matrix image including the dynamic visual compensation elements is generated. For example, the see-through effect of the space dot matrix image 20 may be achieved through gaps between the dots 21 (the visual compensation elements) in the space dot matrix image 20. For example, the see-through effect of the space dot matrix image 20 may also be achieved by globally or locally adjusting the transparency or saturation of the space dot matrix image 20. For example, the see-through effect of the space dot matrix image 20 may also be achieved by adjusting the transparency and saturation of some or all of the dots 21 (the visual compensation elements) in the space dot matrix image 20.

For example, when the space dot matrix image including the dynamic visual compensation elements is generated, a motion attribute of the space dot matrix image may be adjusted based on the head motion information. For example, if the current object moves their head forward, the dots (the visual compensation elements) in the space dot matrix image may move backward, to counteract a visual change resulting from the forward movement of the head. If the current object moves their head backward, the dots (the visual compensation elements) in the space dot matrix image may move forward, to counteract a visual change resulting from the backward movement of the head. If the current object moves their head to the left, the dots (the visual compensation elements) in the space dot matrix image may move to the right, to counteract a visual change resulting from the leftward movement of the head. If the current object moves their head to the right, the dots (the visual compensation elements) in the space dot matrix image may move to the left, to counteract a visual change resulting from the rightward movement of the head. The compensation can reduce the dizziness and other types of discomfort that may result from the inconsistency between a simulated view and visual signals expected by the brain.

In addition, the target visual effect such as the stereo sense, the sense of distance, and the sense of perspective may be generated by adjusting the number, the position, the size, a spacing and a motion attribute of each dot (visual compensation element) in the space dot matrix image. Visual signals to the brain generated by the space dot matrix image are consistent with visual signals generated by the vestibular system of the current object based on the head motion information.

In some embodiments, the visual compensation image includes a mask layer

The generating, based on the head motion information, a visual compensation image including the dynamic visual compensation elements includes:
generating, based on the head motion information, the mask layer including the dynamic visual compensation elements.

For example, in order to implement more accurate visual compensation, the visual compensation image may include the mask layer. The mask layer may be generated based on the head motion information, and can adapt to different head movements and changes in viewing angle. When the mask layer including the dynamic visual compensation elements is generated, a view of the mask layer may be adjusted and transformed based on the head motion information such as the position, orientation, and posture of the head. The transformation may achieve a perspective effect of the mask layer by using an image transformation algorithm, such as affine transformation or perspective transformation.

The visual compensation elements in the mask layer may also be generated based on the visual optical flow. In the head-mounted display, the visual optical flow may be used to generate, based on captured head motion information, visual compensation elements for performing reverse visual compensation for the visual signals generated by the head motion information, and present the visual compensation elements in the mask layer. The reverse visual compensation can eliminate visual blurring and distortion caused by the head motion, thereby providing a clearer and more natural visual effect.

For example, a see-through mask layer including the dynamic visual compensation elements is generated. For example, a see-through effect of the mask layer may also be achieved by globally or locally adjusting the transparency or saturation of the mask layer

In some embodiments, the generating a visual compensation image including the dynamic visual compensation elements includes:
generating, based on the head motion information and the first scene image, the visual compensation image including the visual compensation elements, where the visual compensation elements have matching visual attribute features with the first scene image.

In order to achieve a more realistic virtual effect, the visual compensation image including the visual compensation elements may be generated based on the head motion information and the first scene image. A reverse visual compensation technique may be used to eliminate visual blurring and distortion caused by the head motion, thereby providing a clearer and more natural visual effect. The reverse visual compensation technique may be based on visual optical flow, upon which the head motion information is captured, and the visual compensation elements for performing reverse visual compensation for the visual signals generated by the head motion information are generated, such that the visual compensation elements can be better fused with the first scene image.

The process of generating a visual compensation image may include the following steps.
1) Analyze a first scene image, to obtain visual attribute features, such as the color, texture, and light and shadow, of the first scene image.
2) Generate, based on head motion information and the visual attribute features of the first scene image, visual compensation elements matching the first scene image, where the visual compensation elements have matching visual attribute features with the first scene image. For example, these visual compensation elements may be virtual objects, characters, symbols, etc., and they may be seamlessly fused with the first scene image.
3) Combine the visual compensation elements with a template image, to generate a visual compensation image including dynamic visual compensation elements. For example, the visual compensation elements in the visual compensation image may change with head movements and changes in viewing angle, thereby providing a more realistic and natural visual experience.

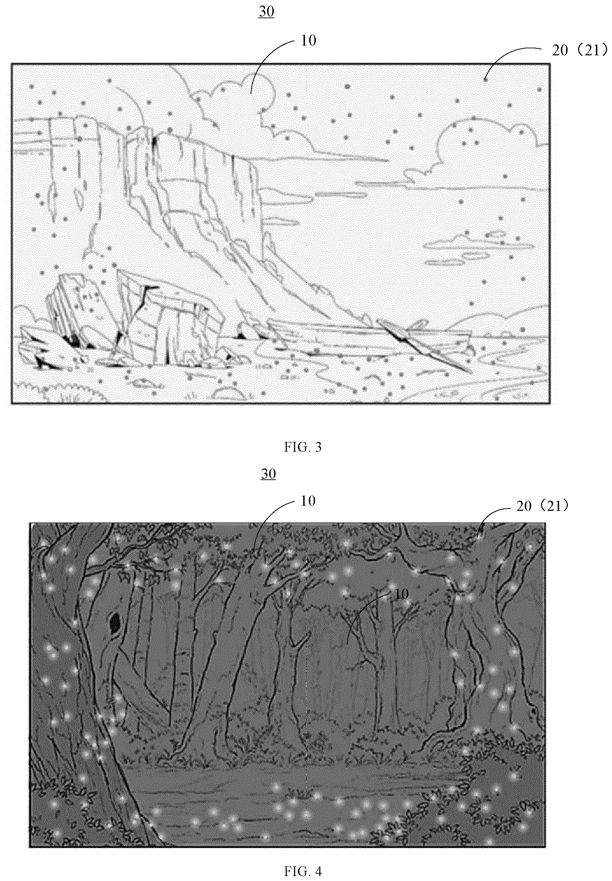

For example, the template image may be a space dot matrix image, and the visual compensation elements form dots in the space dot matrix image. In a schematic diagram of an application scenario as shown in FIG. 3, a first scene image 10 is a virtual dessert scene, and dots 21 in a generated visual compensation image 20 are visual compensation elements representing dust. In a schematic diagram of an application scenario as shown in FIG. 4, a first scene image 10 is a virtual night forest scene, and dots 21 in a generated visual compensation image 20 are visual compensation elements representing fireflies.

For example, the template image may be a mask layer, and the visual compensation elements form image blocks or virtual objects in the mask layer

For example, a visual compensation image including visual compensation elements is generated based on the head motion information and the first scene image, and the visual compensation elements have matching visual attribute features with the first scene image. Therefore, the user can see a scene image including the visual compensation elements through the head-mounted display, and these visual compensation elements may be seamlessly fused with the first scene image, making the user feel that the visual compensation elements are real. This technique can be widely applied in virtual reality, augmented reality, games, training, and other fields, to provide a more personalized and immersive experience.

In some embodiments, the visual attribute feature includes at least one of a spatial feature, a color feature, a brightness feature, a detail texture feature, and a motion feature.

For example, the visual attribute feature may include at least one of the spatial feature, the color feature, the brightness feature, the detail texture feature, and the motion feature. The visual compensation elements have matching visual attribute features with the first scene image, such that the visual compensation elements can be fused with the first scene image.

For example, spatial feature match: the visual compensation elements are kept consistent with the first scene image in terms of spatial layout and geometric features, such that the visual compensation elements have matching visual attribute features with the first scene image. If the visual compensation elements do not match the first scene image in terms of spatial features, there may be a visual conflict between the visual compensation elements and the first scene image, which destroys the overall consistency.

For example, color feature match: the visual compensation elements are kept consistent with the first scene image in terms of color features, such that the visual compensation elements have matching visual attribute features with the first scene image. If the visual compensation elements are significantly different from the first scene image in terms of color, the visual compensation elements are visually separated from the first scene image, which destroys the overall sense of fusion.

For example, brightness feature match: the visual compensation elements are kept consistent with the first scene image in terms of brightness features, such that the visual compensation elements have matching visual attribute features with the first scene image. If the visual compensation elements are significantly different from the first scene image in terms of brightness, the visual compensation elements are visually separated from the first scene image, which destroys the overall sense of fusion.

For example, detail texture feature match: the visual compensation elements have matching detail texture features with the first scene image. If the visual compensation elements do not match the first scene image in terms of detail texture features, there is visual disharmony between the visual compensation elements and the first scene image, which destroys the overall sense of fusion.

For example, motion feature match: if an object or element in the first scene image is in motion, the visual compensation elements need to maintain the same or similar motion trajectory and speed, to maintain the consistency of the motion features.

Therefore, the visual compensation elements are kept consistent with or match the first scene image in terms of the visual attribute features such as the spatial features, color features, brightness features, detail texture features, and motion features, which allows for good fusion, thus creating a visually realistic feeling.

In some embodiments, the method further includes:
determining a second motion direction of the visual compensation elements based on a first motion direction indicated by the head motion information, where the first motion direction is opposite to the second motion direction.

For example, the second motion direction of the visual compensation elements in the visual compensation image is opposite to the first motion direction indicated by the head motion information. For example, if the current object (the user) moves their head to the left, the visual compensation elements in the visual compensation image move to the right, to counteract a visual change resulting from the left movement of the head. This can effectively reduce the dizziness and other types of discomfort that may result from the inconsistency between a simulated view and visual signals expected by the brain.

For example, the second motion direction of the visual compensation elements in the visual compensation image is opposite to the first motion direction indicated by the head motion information. For example, if the current object (the user) moves their head forward, the visual compensation elements in the visual compensation image move backward, which can counteract a visual change resulting from the forward movement of the head, and can also visually create a perspective effect, giving the user a feeling of passing through a tunnel or entering a cave. The effect can improve the sense of immersion of the user and give the user a richer experience in the virtual environment.

Step 124: Display the visual compensation image in a specified region of the first scene image, to generate a target scene image.

First, a display position of the visual compensation image in the first scene image needs to be determined, that is, the specified region of the first scene image needs to be determined. The display position may be specified by the user or calculated automatically through an algorithm. The direction and position of a line of sight of the user can be determined based on the tracking system in the head-mounted display, such that the visual compensation image is displayed at a corresponding position of the first scene image. For motion of different applications in a virtual scene, the visual compensation image (such as the space dot matrix image and the mask layer) may be in any form and appear in any specified region within a visible range of the target scene image. Generally, the visual compensation image may be placed in a peripheral visual region where the user is less sensitive to details, for example, the visual compensation image is displayed in a peripheral region of the first scene image. For example, the visual compensation image may be confined to a peripheral region of a butterfly-shaped visual region corresponding to a visual center of the user's eyes. For example, the visual compensation image may be blended on an entire grid of the first scene image. In this way, visual interference can be reduced; in addition, necessary visual signals can still be provided to the brain to achieve perceptual convergence.

Then, the adjusted visual compensation image is combined with the first scene image, to generate the target scene image. This process may be implemented using image processing software or algorithms, such as a pixel-level weighted averaging method or a region-based fusion algorithm. In this way, the visual compensation image can be effectively fused with the first scene image, to generate the natural and realistic target scene image.

In addition, in order to provide a more realistic and natural visual experience, the visual compensation image also needs to be continuously updated based on a change in the posture data, to respond to the head movements and the changes in viewing angle of the user.

The visual compensation image may be a see-through visual compensation image. In the generated target scene image, less blocking of the first scene image by the see-through visual compensation image is implemented, thereby retaining more sense of immersion. This is because when the position, size, and/or transparency of the visual compensation image is determined, blocking of important visual information in the first scene image can be minimized, which allows the user to feel scenes and atmosphere in the virtual environment more naturally and realistically.

In the schematic diagram of the application scenario as shown in FIG. 3, the first scene image 10 is the virtual dessert scene, the dots 21 in the visual compensation image 20 are the visual compensation elements representing dust, the visual compensation image 20 is displayed in a specified region (for example, a peripheral region) of the first scene image 10, to generate a target scene image 30, where the target scene image 30 is a virtual desert scene image that has a rising-dust effect.

In the schematic diagram of the application scenario as shown in FIG. 4, the first scene image 10 is the virtual night forest scene, the dots 21 in the visual compensation image 20 are the visual compensation elements representing fireflies, the visual compensation image 20 is displayed in a specified region (for example, a peripheral region) of the first scene image 10, to generate a target scene image 30, where the target scene image 30 is a virtual night forest scene image that has a fluttering-firefly effect.

In some embodiments, the specified region is the peripheral region of the first scene image, and the peripheral region is located at an edge of a central region of the first scene image.

The displaying the visual compensation image in a specified region of the first scene image, to generate a target scene image includes:
displaying the visual compensation image in the peripheral region of the first scene image, to generate the target scene image.

For example, since the user mainly focuses on the central region and is not sensitive to the peripheral visual region within a visible range of the user, in order to effectively reduce the dizziness that the user experiences when using the virtual reality device to view the target scene image, the specified region may be the peripheral region of the first scene image, where the peripheral region is located at the edge of the central region of the first scene image. In addition, this selection can make better use of the central region of the first scene image, such that the first scene image is more naturally fused with the visual compensation image.

During the process of displaying the visual compensation image in the specified region of the first scene image, numerous different algorithms and techniques may be used. For example, the image processing software or algorithms may be used to adjust the size and position of the visual compensation image, such that the visual compensation image matches the peripheral region of the first scene image. The region-based fusion algorithm, etc. may also be used to fuse the visual compensation image with the first scene image, to generate the target scene image.

When the visual compensation image is displayed in the peripheral region of the first scene image, it is necessary to avoid excessive blocking of or interference with the central region of the first scene image. In this way, the importance and prominence of the central region of the first scene image in the target scene image can be maintained, the visual compensation image can be more naturally fused with the first scene image, and the dizziness that the user experiences when using the virtual reality device to view the target scene image can be effectively reduced.

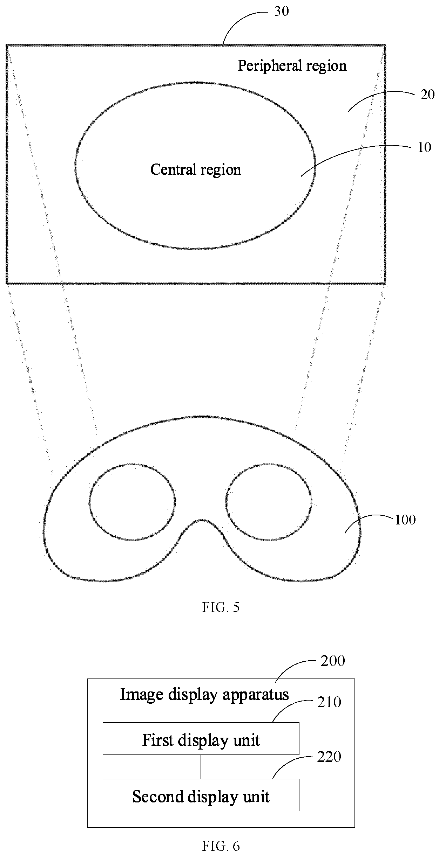

In a schematic diagram of an application scenario as shown in FIG. 5, a visual compensation image 20 is displayed in a peripheral region of a first scene image 10, to generate a target scene image 30, where a first region scene image corresponding to a central region of the first scene image 10 is displayed in the central region without blocking, and a second region scene image corresponding to the peripheral region of the first scene image 10 is displayed in the peripheral region through a semi-transparent or transparent visual compensation image. The current object views the target scene image 30 through a head-mounted display 100 worn on their head.

Step 125: Present, in the three-dimensional environment, the target scene image including the dynamic visual compensation elements.

For example, the dynamic visual compensation elements may be rendered and added to the target scene image. These visual compensation elements are virtual elements generated based on the visual optical flow technique, and may dynamically change with the motion of the user. When the target scene image is presented, these visual compensation elements can be combined with an image to create a dynamic visual effect. The target scene image including the dynamic visual compensation elements is presented in the three-dimensional environment, which allows a more realistic and immersive virtual reality experience to be provided to the user. In addition, the technique can further effectively reduce the feeling of dizziness that the user experiences when using the virtual reality device, thereby providing improved comfort and experience for the user

In some embodiments, the visual compensation image is a see-through visual compensation image.

The presenting, in the three-dimensional environment, the target scene image including the dynamic visual compensation elements includes:
presenting, in the three-dimensional environment, the target scene image including the dynamic visual compensation elements, where a region scene image in the target scene image that corresponds to the specified region of the first scene image is displayed through the visual compensation image.

For example, the visual compensation image is the see-through visual compensation image. This means that the visual compensation image may be considered as a transparent or semi-transparent image that does not completely block other images or objects in the target scene image. When the target scene image is presented, the visual compensation image is superimposed onto or embedded into the target scene image, but it does not completely cover or block other images or objects in the target scene image. The specified region is the region covered by the visual compensation image, and the region scene image corresponding to the specified region of the first scene image can be displayed through the visual compensation image. The see-through visual compensation image is presented, which allows the user to better understand and operate objects and scenes in the virtual environment.

In some embodiments, a zoom adjustment, a saturation adjustment, a transparency adjustment, etc. can further be performed for the visual compensation image based on changes in head and body postures of the virtual character corresponding to the current object.

In some embodiments, the virtual reality device includes a head-mounted display for the current object to wear on the head, and a controller for the current object to interact with a virtual reality scene.

In addition to the head motion information, the posture data further comprises virtual motion information independent of the head motion information and the obtaining posture data generated when the current object wearing the virtual reality device performs motion includes:
obtaining the head motion information through the head-mounted display, where the head motion information is used to control a head posture of a virtual character that corresponds to the current object in the virtual reality scene; and obtaining the virtual motion information independent of the head motion information through the controller, where the virtual motion information is used to control a body posture of the virtual character that corresponds to the current object in the virtual reality scene.

The virtual motion information independent of the head motion information is obtained through the controller, where the virtual motion information is used to control the body posture of the virtual character that corresponds to the current object in the virtual reality scene.

The virtual motion information is information about the body posture, such as a posture, motion, a gesture and a walk of the virtual character corresponding to the current object. The information is used to control the motion and posture of the virtual character in the virtual reality scene, such that the motion and posture of the virtual character match the motion and posture of the current object. For example, if the current object (the user) moves forward, the virtual character should accordingly move forward; and if the current object (the user) makes a handshake gesture, the virtual character should perform the same handshake movement. The virtual motion information may be used for virtual reality simulation or emulation.

For example, the controller may include, but is not limited to, a joystick, a glove, a ring, a tactile feedback device, a motion capture device, etc. These devices can capture the posture and motion of the current object through a built-in sensor or an external device, and transmit the posture and motion of the current object to the virtual reality device.

For example, the controller, such as the joystick, the glove, and the ring, usually has a posture capture function, and can capture posture data of the user through the built-in sensor or the external device.

For example, the joystick can capture the motion information, such as displacement, an angle, and rotation, of the current object, the glove can capture more detailed hand motion and finger bending information of the current object, the ring can capture ring motion information of the current object, and the tactile feedback device can provide a tactile feedback, allowing the current object (the user) to feel objects and scenes in the virtual environment more realistically.

In some embodiments, based on the posture data including the head motion information and the virtual motion information, the first scene image for simulation of the virtual reality scene may be generated. The head motion information and the virtual motion information are generated in real time based on the motion and posture of the current object (the user), and can thus be considered as an avatar of the current object (the user) in the virtual reality scene.

In some embodiments, the presenting, in the three-dimensional environment, the target scene image including the dynamic visual compensation elements includes:
when the target scene image including the dynamic visual compensation elements is presented in the three-dimensional environment, dynamically adjusting a size of the specified region based on the posture data,
where when the posture data indicates that the head posture of the virtual character is in a motion state and the body posture thereof is in a static state, the specified region is zoomed out until the visual compensation image including the dynamic visual compensation elements disappears from the target scene image; and
when the posture data indicates that the head posture of the virtual character is in the motion state and the body posture thereof is in the motion state, the specified region is zoomed in until the visual compensation image including the dynamic visual compensation elements is fully displayed in the target scene image.

For example, when the target scene image is displayed, the size of the specified region may be dynamically adjusted based on the posture data. The dynamic adjustment can prevent the user from experiencing the dizziness, and can also improve the sense of realism and immersion in the virtual environment, allowing the user to feel the scenes and atmosphere in the virtual environment more naturally and realistically.

When the posture data indicates that the head posture of the virtual character is in the motion state and the body posture thereof is in the static state, it indicates that the simulated view gradually converges with the visual signals expected by the brain based on the vestibular system. In this case, the specified region can be zoomed out until the visual compensation image disappears from the target scene image. The zoom-out adjustment can reduce the blocking of important information in the first scene image, and can also avoid interference of the excessive visual compensation image with the line of sight of the user and reduce the feeling of dizziness of the user

When the posture data indicates that the head posture of the virtual character is in the motion state and the body posture thereof is in the motion state, it indicates that the simulated view gradually deviates from the visual signals expected by the brain based on the vestibular system. In this case, the specified region can be zoomed in until the visual compensation image is fully displayed in the target scene image, so as to restore the visual compensation image including the dynamic visual compensation elements, and perform, by means of the visual compensation image, the reverse visual compensation for the visual signals generated by the head motion information. In this way, the feeling of dizziness of the user is effectively reduced.

It should be noted that when the size of the specified region is dynamically adjusted, it is necessary to ensure that the adjustment is smooth and natural, to avoid noticeable jumps and discontinuities. This can be implemented using an appropriate algorithm and technique, for example, the size of the specified region is smoothly adjusted by using an interpolation algorithm.

In some embodiments, the presenting, in the three-dimensional environment, the target scene image including the dynamic visual compensation elements includes:
when the target scene image including the dynamic visual compensation elements is presented in the three-dimensional environment, dynamically adjusting transparency of the visual compensation image based on the posture data,
where when the posture data indicates that the head posture of the virtual character is in a motion state and the body posture thereof is in a static state, the transparency of the visual compensation image is increased until the visual compensation image including the dynamic visual compensation elements disappears from the target scene image; and
when the posture data indicates that the head posture of the virtual character is in the motion state and the body posture thereof is in the motion state, the transparency of the visual compensation image is reduced until the visual compensation image including the dynamic visual compensation elements is fully displayed in the target scene image.

For example, when the target scene image is displayed, the transparency of the visual compensation image can be dynamically adjusted based on the posture data. The dynamic adjustment can prevent the user from experiencing the dizziness, and can also improve the sense of realism and immersion in the virtual environment, allowing the user to feel the scenes and atmosphere in the virtual environment more naturally and realistically.

When the posture data indicates that the head posture of the virtual character is in the motion state and the body posture thereof is in the static state, it indicates that the simulated view gradually converges with the visual signals expected by the brain based on the vestibular system. In this case, the transparency of the visual compensation image can be increased until the visual compensation image disappears from the target scene image. The adjustment of increasing the transparency can make the first scene image more prominent and clearer, and can also reduce the interference of the visual compensation image with the line of sight of the user and reduce the feeling of dizziness of the user.

When the posture data indicates that the head posture of the virtual character is in the motion state and the body posture thereof is in the motion state, it indicates that the simulated view gradually deviates from the visual signals expected by the brain based on the vestibular system. In this case, the transparency of the visual compensation image can be reduced until the visual compensation image is fully displayed in the target scene image, so as to restore the visual compensation image including the dynamic visual compensation elements, and perform, by means of the visual compensation image, the reverse visual compensation for the visual signals generated by the head motion information. In this way, the feeling of dizziness of the user is effectively reduced.

It should be noted that when the transparency of the visual compensation image is dynamically adjusted, it is necessary to ensure that the adjustment is smooth and natural, to avoid noticeable jumps and discontinuities.

In some embodiments, the presenting, in the three-dimensional environment, the target scene image including the dynamic visual compensation elements includes:
when the target scene image including the dynamic visual compensation elements is presented in the three-dimensional environment, dynamically adjusting saturation of the visual compensation image based on the posture data,
where when the posture data indicates that the head posture of the virtual character is in a motion state and the body posture thereof is in a static state, the saturation of the visual compensation image is reduced until the visual compensation image including the dynamic visual compensation elements disappears from the target scene image; and
when the posture data indicates that the head posture of the virtual character is in the motion state and the body posture thereof is in the motion state, the saturation of the visual compensation image is increased until the visual compensation image including the dynamic visual compensation elements is fully displayed in the target scene image.

For example, when the target scene image is displayed, the saturation of the visual compensation image may be dynamically adjusted based on the posture data. The dynamic adjustment can prevent the user from experiencing the dizziness, and can also improve the sense of realism and immersion in the virtual environment, allowing the user to feel the scenes and atmosphere in the virtual environment more naturally and realistically.

When the posture data indicates that the head posture of the virtual character is in the motion state and the body posture thereof is in the static state, it indicates that the simulated view gradually converges with the visual signals expected by the brain based on the vestibular system. In this case, the saturation of the visual compensation image can be reduced until the visual compensation image disappears from the target scene image. The adjustment of reducing the saturation can make the first scene image clearer and more natural, and can also reduce the interference of the visual compensation image with the line of sight of the user and reduce the feeling of dizziness of the user

When the posture data indicates that the head posture of the virtual character is in the motion state and the body posture thereof is in the motion state, it indicates that the simulated view gradually deviates from the visual signals expected by the brain based on the vestibular system. In this case, the saturation of the visual compensation image can be increased until the visual compensation image is fully displayed in the target scene image, so as to restore the visual compensation image including the dynamic visual compensation elements, and perform, by means of the visual compensation image, the reverse visual compensation for the visual signals generated by the head motion information. In this way, the feeling of dizziness of the user is effectively reduced.

It should be noted that when the saturation of the visual compensation image is dynamically adjusted, it is necessary to ensure that the adjustment is smooth and natural, to avoid noticeable jumps and discontinuities.

All of the above technical solutions may be combined in any way, to form optional embodiments of the present application, and details are not described again herein.

According to the embodiments of the present application, the three-dimensional environment is displayed, and the dynamic visual compensation elements are presented in the three-dimensional environment in response to the motion of the current object wearing the virtual reality device. According to the embodiments of the present application, the dynamic visual compensation elements are presented in the three-dimensional environment in response to the motion of the current object wearing the virtual reality device, such that the dizziness that the user experiences when using the virtual reality device can be effectively reduced, and less blocking of the first scene image by the see-through visual compensation image is implemented, thereby retaining more sense of immersion and thus improving the user experience.

For ease of better implementing the image display method in the embodiments of the present application, an embodiment of the present application further provides an image display apparatus. Referring to FIG. 6, FIG. 6 is a schematic diagram of a structure of an image display apparatus according to an embodiment of the present application. The image display apparatus 200 can be included in a virtual reality device and may include:
a first display unit 210 configured to display a three-dimensional environment; and
a second display unit 220 configured to present dynamic visual compensation elements in the three-dimensional environment in response to motion of a current object wearing a virtual reality device.

In some embodiments, the second display unit 220 includes:
an obtaining subunit configured to obtain posture data generated when the current object wearing the virtual reality device performs motion, where the posture data includes head motion information;
a first generation subunit configured to generate a first scene image for simulation of a virtual reality scene based on the posture data;
a second generation subunit configured to generate a visual compensation image including the dynamic visual compensation elements, where the visual compensation elements are virtual elements that are generated, based on visual optical flow, for performing reverse visual compensation for visual signals generated by the head motion information;
a third generation subunit configured to display the visual compensation image in a specified region of the first scene image, to generate a target scene image including the dynamic visual compensation elements; and
a display subunit configured to present, in the three-dimensional environment, the target scene image including the dynamic visual compensation elements.

In some embodiments, the visual compensation image is a see-through visual compensation image.

The display subunit is configured to present, in the three-dimensional environment, the target scene image including the dynamic visual compensation elements, where a region scene image in the target scene image that corresponds to the specified region of the first scene image is displayed through the visual compensation image.

In some embodiments, the visual compensation image includes a space dot matrix image.

The second generation subunit is configured to generate, based on the head motion information, the space dot matrix image including the dynamic visual compensation elements.

In some embodiments, the visual compensation image includes a mask layer

The second generation subunit is configured to generate, based on the head motion information, the mask layer including the dynamic visual compensation elements.

In some embodiments, the second generation subunit is configured to generate, based on the head motion information and the first scene image, the visual compensation image including the dynamic visual compensation elements, where the visual compensation elements have matching visual attribute features with the first scene image.

In some embodiments, the visual attribute feature includes at least one of a spatial feature, a color feature, a brightness feature, a detail texture feature, and a motion feature.

In some embodiments, the second generation subunit is configured to determine a second motion direction of the visual compensation elements based on a first motion direction indicated by the head motion information, where the first motion direction is opposite to the second motion direction.

In some embodiments, the specified region is the peripheral region of the first scene image, and the peripheral region is located at an edge of a central region of the first scene image.

The third generation subunit is configured to display the visual compensation image in the peripheral region of the first scene image, to generate the target scene image.

In some embodiments, the virtual reality device includes a head-mounted display for the current object to wear on the head, and a controller for the current object to interact with a virtual reality scene.

The posture data further includes virtual motion information independent of the head motion information and the obtaining subunit is configured to: obtain the head motion information through the head-mounted display, where the head motion information is used to control a head posture of a virtual character that corresponds to the current object in the virtual reality scene; and obtain the virtual motion information independent of the head motion information through the controller, where the virtual motion information is used to control a body posture of the virtual character that corresponds to the current object in the virtual reality scene.

In some embodiments, the display subunit is further configured to: when the target scene image including the dynamic visual compensation elements is presented in the three-dimensional environment, dynamically adjust a size of the specified region based on the posture data,
where when the posture data indicates that the head posture of the virtual character is in a motion state and the body posture thereof is in a static state, the specified region is zoomed out until the visual compensation image including the dynamic visual compensation elements disappears from the target scene image; and
when the posture data indicates that the head posture of the virtual character is in the motion state and the body posture thereof is in the motion state, the specified region is zoomed in until the visual compensation image including the dynamic visual compensation elements is fully displayed in the target scene image.

In some embodiments, the display subunit is further configured to: when the target scene image including the dynamic visual compensation elements is presented in the three-dimensional environment, dynamically adjust transparency of the visual compensation image based on the posture data,
where when the posture data indicates that the head posture of the virtual character is in a motion state and the body posture thereof is in a static state, the transparency of the visual compensation image is increased until the visual compensation image including the dynamic visual compensation elements disappears from the target scene image; and
when the posture data indicates that the head posture of the virtual character is in the motion state and the body posture thereof is in the motion state, the transparency of the visual compensation image is reduced until the visual compensation image including the dynamic visual compensation elements is fully displayed in the target scene image.

In some embodiments, the display subunit is further configured to: when the target scene image including the dynamic visual compensation elements is presented in the three-dimensional environment, dynamically adjust saturation of the visual compensation image based on the posture data,
where when the posture data indicates that the head posture of the virtual character is in a motion state and the body posture thereof is in a static state, the saturation of the visual compensation image is reduced until the visual compensation image including the dynamic visual compensation elements disappears from the target scene image; and
when the posture data indicates that the head posture of the virtual character is in the motion state and the body posture thereof is in the motion state, the saturation of the visual compensation image is increased until the visual compensation image including the dynamic visual compensation elements is fully displayed in the target scene image.

All or some of the units in the above image display apparatus 200 may be implemented by software, hardware, and a combination thereof. The above units may be embedded in or independent of a processor in a terminal device in the form of hardware, or may be stored in a memory of the terminal device in the form of software, such that the processor can invoke and execute operations corresponding to the above units.

The image display apparatus 200 may be integrated into a terminal or a server that is provided with a memory and has a computing capability with a processor mounted therein, or the image display apparatus 200 is the terminal or the server.

In some embodiments, the present application further provides a terminal device including a memory and a processor, where the memory stores a computer program, and when the processor executes the computer program, the steps of the above method embodiments are implemented.

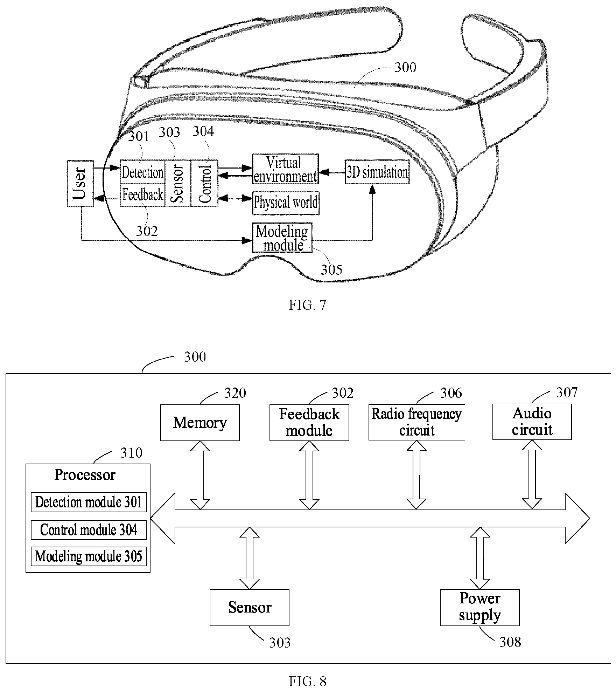

As shown in FIG. 7, FIG. 7 is a schematic diagram of a structure of a terminal device according to an embodiment of the present application. The terminal device 300 may be generally provided in the form of glasses, a head-mounted display (HMD), or contact lenses, to implement visual perception and other forms of perception. Certainly, the terminal device is not limited to these implementation forms, and may be further miniaturized or enlarged as needed. The terminal device 300 may include, but is not limited to, the following structures.

A detection module 301: It is configured to detect operation commands from a user by using a variety of sensors, and apply the operation commands to a virtual environment, such as by continuously updating images displayed on a display screen following a line of sight of the user, to enable interaction between the user and a virtual scene, such as by continuously updating content of reality based on a detected turning direction of the head of the user

A feedback module 302: It is configured to receive data from the sensor, and provide a real-time feedback for the user. The feedback module 302 may be configured to display a graphical user interface, and for example, display the virtual environment in the graphical user interface. For example, the feedback module 302 may include a display screen, etc.

A sensor 303: It is configured to receive the operation commands from the user, and apply the operation commands to the virtual environment. In addition, it is configured to provide results generated after operations to the user in various forms of feedback.

A control module 304: It is configured to control the sensor and various input/output apparatuses, including obtaining of data (such as motions and voice) of the user and outputting of perception data, such as images, vibrations, temperature and sound, to have an effect on the user, the virtual environment, and a physical world.

A modeling module 305: It is configured to construct a three-dimensional model of the virtual environment, which may also include construction of sound, haptics, and various other feedback mechanisms in the three-dimensional model.

In the embodiments of the present application, a three-dimensional environment can be constructed through the modeling module 305; motion of a current object wearing a virtual reality device can be responded to through the detection module 301 and/or the sensor 303; visual compensation elements can be generated through the control module 304; and dynamic visual compensation elements can be presented in the three-dimensional environment through the feedback module 302.

In some embodiments, as shown in FIG. 8, FIG. 8 is a schematic diagram of another structure of the terminal device according to an embodiment of the present application. The terminal device 300 further includes a processor 310 with one or more processing cores, a memory 320 with one or more computer-readable storage media, and a computer program stored on the memory 320 and executable on the processor. The processor 310 is electrically connected to the memory 320. Those skilled in the art may understand that the structure of the terminal device shown in the figure does not constitute a limitation on the terminal device, and may include more or fewer components than those shown in the figure, or combine some components, or adopt different component arrangements.

The processor 310 is a control center of the terminal device 300, and is connected to various parts of the whole terminal device 300 by using various interfaces and lines. By running or loading a software program and/or module stored in the memory 320, and invoking data stored in the memory 320, various functions of the terminal device 300 and data processing are performed, thereby performing overall monitoring on the terminal device 300.

In the embodiments of the present application, the processor 310 in the terminal device 300 may load instructions corresponding to processes of one or more applications into the memory 320 according to the following steps, and the processor 310 runs the applications stored in the memory 320, to implement various functions:
displaying a three-dimensional environment; and presenting dynamic visual compensation elements in the three-dimensional environment in response to motion of a current object wearing the virtual reality device.

For the specific implementation of the above operations, reference may be made to the foregoing embodiments, which will not be repeated herein.

In some embodiments, the processor 310 may include a detection module 301, a control module 304, and a modeling module 305.

In some embodiments, as shown in FIG. 8, the terminal device 300 further includes: a radio frequency circuit 306, an audio circuit 307, and a power supply 308. The processor 310 is electrically connected to the memory 320, the feedback module 302, the sensor 303, the radio frequency circuit 306, the audio circuit 307, and the power supply 308, respectively. Those skilled in the art may understand that the structure of the terminal device shown in FIG. 7 or FIG. 8 does not constitute a limitation on the terminal device, and may include more or fewer components than those shown in the figure, or combine some components, or adopt different component arrangements.

The radio frequency circuit 306 may be used to receive and transmit radio frequency signals, to establish a wireless communication with a network device or other terminal devices through wireless communication, thereby receiving and transmitting signals with the network device or the other terminal devices.

The audio circuit 307 may be used to provide an audio interface between the user and the terminal device through a speaker and a microphone. The audio circuit 307 may transmit an electrical signal, which is obtained by converting received audio data, to the speaker, which then converts the electrical signal into a sound signal for output. Moreover, the microphone converts the acquired sound signal into an electrical signal, which is received by the audio circuit 307 and converted into audio data; the audio data is output to the processor 310 for processing, and is then sent to, for example, another terminal device via the radio frequency circuit 306, or is output to the memory for further processing. The audio circuit 307 may further include an earplug jack, to provide a communication between an external headset and the terminal device.

The power supply 308 is used to supply power to the components of the terminal device 300.

Although not shown in FIG. 7 or FIG. 8, the terminal device 300 may further include a camera lens, a wireless fidelity module, a Bluetooth module, an input module, etc., which will not be repeated herein.

In some embodiments, the present application further provides a computer-readable storage medium for storing a computer program. The computer-readable storage medium may be applied to a terminal device or a server, and the computer program causes the terminal device or the server to perform the corresponding process in the image display method in the embodiments of the present application. For brevity, details are not described herein again.

In some embodiments, the present application further provides a computer program product. The computer program product includes a computer program. The computer program is stored in a computer-readable storage medium. A processor of a terminal device reads the computer program from the computer-readable storage medium. The processor executes the computer program so that the terminal device performs the corresponding process in the image display method in the embodiments of the present application. For brevity, details are not described herein again.

The present application further provides a computer program. The computer program product includes a computer program, and the computer program is stored in a computer-readable storage medium. A processor of a terminal device reads the computer program from the computer-readable storage medium. The processor executes the computer program so that the terminal device performs the corresponding process in the image display method in the embodiments of the present application. For brevity, details are not described herein again.

It should be understood that the processor in the embodiments of the present application may be an integrated circuit chip with a signal processing capability. During implementation, the steps in the above method embodiments may be completed by an integrated logic circuit of hardware in the processor or an instruction in the form of software. The above processor may be a general-purpose processor, a digital signal processor (DSP), an application specific integrated circuit (ASIC), a field programmable gate array (FPGA), or other programmable logic devices, a discrete gate or transistor logic device, or a discrete hardware component. The processor may implement or perform the methods, steps, and logical block diagrams that are disclosed in embodiments of the present application. The general-purpose processor may be a microprocessor, or the processor may be any conventional processor or the like. The steps in the methods disclosed with reference to embodiments of the present application may be directly performed and completed by a hardware decoding processor, or may be performed and completed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the above method in combination with the hardware of the processor.

It may be understood that the memory in this embodiment of the present application may be a volatile memory or a nonvolatile memory, or may include a volatile memory and a nonvolatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example but not restrictive description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory for the system and method described herein is intended to include, but is not limited to, these and any other suitable types of memories.

Those of ordinary skill in the art may be aware that the modules and algorithm steps of various examples described in combination with the embodiments disclosed herein can be implemented in electronic hardware or a combination of computer software and electronic hardware. Whether these functions are performed in hardware or software depends on the specific application and design constraint conditions of the technical solution. A person skilled in the art can implement the described functions by using different methods for each particular application, but such implementation should not be considered as going beyond the scope of the present application.

It can be clearly understood by those skilled in the art that, for convenience and brevity of description, for the specific operation processes of the system, apparatus, and units described above, reference may be made to the corresponding processes in the foregoing method embodiments, and details are not described herein again.

In the embodiments of the present application, the term "module" or "unit" means a computer program or a part of a computer program with a predetermined function, and works with other related parts to achieve a predetermined objective. All or some of the modules or units may be implemented by using software, hardware (for example, a processing circuit or a memory), or a combination thereof. Similarly, one processor (or a plurality of processors or memories) may be used to implement one or more modules or units. In addition, each module or unit may be a part of an integrated module or unit including a function of the module or unit.

In the several embodiments provided in the present application, it should be understood that the disclosed system, apparatus, and method may be implemented in other manners. For example, the apparatus embodiment described above is merely an example. For example, the unit division is merely logical function division and may be other division during actual implementation. For example, a plurality of units or components may be combined or integrated into another system, or some features may be omitted or not implemented. In addition, the displayed or discussed mutual couplings, direct couplings, or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, the various functional units in the embodiments of the present application may be integrated into one processing unit, or the various units may be physically present separately, or two or more units may be integrated into one unit.

If the functions are implemented in the form of a software functional unit and sold or used as an independent product, the functions may be stored in a computer-readable storage medium. Based on such an understanding, the technical solutions of the present application essentially, or the part thereof that makes contributions to the prior art, or some of the technical solutions may be implemented in the form of a software product. The computer software product is stored in a storage medium, and includes several instructions for instructing a terminal device (which may be a personal computer or a server) to perform all or some of the steps of the methods described in embodiments of the present application. Moreover, the foregoing storage medium includes a USB flash drive, a removable hard disk, a ROM, a RAM, a magnetic disk, an optical disc, or other various media that can store program code.

The foregoing descriptions are merely specific implementations of the present application, but are not intended to limit the scope of protection of the present application. Any variation or replacement readily figured out by a person skilled in the art within the technical scope disclosed in the present application shall fall within the scope of protection of the present application. Therefore, the scope of protection of the present application shall be subject to the scope of protection of the claims.

## Claims

1. An image display method applied to a virtual reality device, comprising:
displaying a three-dimensional environment; and
presenting dynamic visual compensation elements in the three-dimensional environment in response to motion of a current object wearing the virtual reality device.

2. The image display method according to claim 1, wherein the presenting dynamic visual compensation elements in the three-dimensional environment in response to motion of a current object wearing the virtual reality device comprises:
obtaining posture data generated when the current object wearing the virtual reality device performs motion, wherein the posture data comprises head motion information;
generating a first scene image for simulation of a virtual reality scene based on the posture data;
generating a visual compensation image comprising the dynamic visual compensation elements, wherein the visual compensation elements are virtual elements that are generated, based on visual optical flow, for performing reverse visual compensation for visual signals generated by the head motion information;
displaying the visual compensation image in a specified region of the first scene image, to generate a target scene image comprising the dynamic visual compensation elements; and
presenting, in the three-dimensional environment, the target scene image comprising the dynamic visual compensation elements.

3. The image display method according to claim 2, wherein the visual compensation image is a see-through visual compensation image; and
the presenting, in the three-dimensional environment, the target scene image comprising the dynamic visual compensation elements comprises:
presenting, in the three-dimensional environment, the target scene image comprising the dynamic visual compensation elements, wherein a region scene image in the target scene image that corresponds to the specified region of the first scene image is displayed through the visual compensation image.

4. The image display method according to claim 2, wherein the visual compensation image comprises a space dot matrix image; and
the generating a visual compensation image comprising the dynamic visual compensation elements comprises:
generating, based on the head motion information, the space dot matrix image comprising the dynamic visual compensation elements.

5. The image display method according to claim 2, wherein the visual compensation image comprises a mask layer; and
the generating a visual compensation image comprising the dynamic visual compensation elements comprises:
generating, based on the head motion information, the mask layer comprising the dynamic visual compensation elements.

6. The image display method according to any one of claims 2 to 5, wherein the generating a visual compensation image comprising the dynamic visual compensation elements comprises:
generating, based on the head motion information and the first scene image, the visual compensation image comprising the dynamic visual compensation elements, wherein the visual compensation elements have matching visual attribute features with the first scene image,
optionally,
the visual attribute feature comprises at least one of a spatial feature, a color feature, a brightness feature, a detail texture feature, or a motion feature.

7. The image display method according to claim 2, wherein the method further comprises:
determining a second motion direction of the visual compensation elements based on a first motion direction indicated by the head motion information, wherein the first motion direction is opposite to the second motion direction.

8. The image display method according to claim 2, wherein the specified region is a peripheral region of the first scene image, and the peripheral region is located at an edge of a central region of the first scene image; and
the displaying the visual compensation image in a specified region of the first scene image, to generate a target scene image comprises:
displaying the visual compensation image in the peripheral region of the first scene image, to generate the target scene image.

9. The image display method according to claim 2, wherein the virtual reality device comprises a head-mounted display for the current object to wear on head, and a controller for the current object to interact with the virtual reality scene; and
the posture data further comprises virtual motion information independent of the head motion information and the obtaining posture data generated when the current object wearing the virtual reality device performs motion comprises:
obtaining the head motion information through the head-mounted display, wherein the head motion information is used to control a head posture of a virtual character that corresponds to the current object in the virtual reality scene; and
obtaining the virtual motion information independent of the head motion information through the controller, wherein the virtual motion information is used to control a body posture of the virtual character that corresponds to the current object in the virtual reality scene.

10. The image display method according to claim 9, wherein the presenting, in the three-dimensional environment, the target scene image comprising the dynamic visual compensation elements comprises:
in response to that the target scene image comprising the dynamic visual compensation elements is presented in the three-dimensional environment, dynamically adjusting a size of the specified region based on the posture data,
wherein in response to that the posture data indicates that the head posture of the virtual character is in a motion state and the body posture thereof is in a static state, the specified region is zoomed out until the visual compensation image comprising the dynamic visual compensation elements disappears from the target scene image; and
in response to that the posture data indicates that the head posture of the virtual character is in the motion state and the body posture thereof is in the motion state, the specified region is zoomed in until the visual compensation image comprising the dynamic visual compensation elements is fully displayed in the target scene image.

11. The image display method according to claim 9, wherein the presenting, in the three-dimensional environment, the target scene image comprising the dynamic visual compensation elements comprises:
in response to that the target scene image comprising the dynamic visual compensation elements is presented in the three-dimensional environment, dynamically adjusting transparency of the visual compensation image based on the posture data,
wherein in response to that the posture data indicates that the head posture of the virtual character is in a motion state and the body posture thereof is in a static state, the transparency of the visual compensation image is increased until the visual compensation image comprising the dynamic visual compensation elements disappears from the target scene image; and
in response to that the posture data indicates that the head posture of the virtual character is in the motion state and the body posture thereof is in the motion state, the transparency of the visual compensation image is reduced until the visual compensation image comprising the dynamic visual compensation elements is fully displayed in the target scene image.

12. The image display method according to claim 9, wherein the presenting, in the three-dimensional environment, the target scene image comprising the dynamic visual compensation elements comprises:
in response to that the target scene image comprising the dynamic visual compensation elements is presented in the three-dimensional environment, dynamically adjusting saturation of the visual compensation image based on the posture data,
wherein in response to that the posture data indicates that the head posture of the virtual character is in a motion state and the body posture thereof is in a static state, the saturation of the visual compensation image is reduced until the visual compensation image comprising the dynamic visual compensation elements disappears from the target scene image; and
in response to that the posture data indicates that the head posture of the virtual character is in the motion state and the body posture thereof is in the motion state, the saturation of the visual compensation image is increased until the visual compensation image comprising the dynamic visual compensation elements is fully displayed in the target scene image.

13. A computer-readable storage medium, storing a computer program, wherein the computer program is adapted to be loaded by a processor, to perform the image display method according to any one of claims 1 to 12.

14. A terminal device, comprising a processor and a memory, wherein the memory stores a computer program, and the processor is configured to perform the image display method according to any one of claims 1 to 12 by invoking the computer program stored in the memory.

15. A computer program product, comprising a computer program, wherein the computer program, when executed by a processor, causes the image display method according to any one of claims 1 to 12 to be implemented.
